# FASCICULE DE BREVET EUROPEEN

(11) **EP 3 921 913 B1**
(45) Date de publication et mention de la délivrance du brevet: **23.10.2024**
(21) Numéro de dépôt: 20707493.1
(22) Date de dépôt: 16.01.2020
(51) Int. Cl.: H02J 3/38, H02J 13/00, G05B 13/04, G05B 15/02, H02J 3/32

(54) **PROCEDE DE SUPERVISION D'UN SYSTEME ELECTRIQUE**
VERFAHREN ZUR ÜBERWACHUNG EINES ELEKTRISCHEN SYSTEMS
METHOD FOR SUPERVISING AN ELECTRICAL SYSTEM

(30) Priorité: 04.02.2019 FR 1901032
(43) Date de publication de la demande: 15.12.2021
(73) Titulaire: GÉRÉDIS Deux Sèvres, 79000 Niort (FR); JUNIA, 59046 Lille Cedex (FR)
(72) Inventeur: COURTECUISSE, Vincent, 79000 SCIECQ (FR); COUTARD, Léo, 79000 BESSINES (FR); ROBYNS, Benoît, 59130 LAMBERSART (FR); DAVIGNY, Arnaud, 62400 BETHUNE (FR)
(74) Mandataire: IP Trust
(86) Numéro de dépôt international: PCT/FR2020/050056
(87) Numéro de publication internationale: WO 2020/161406

(56) Documents cités:
- EP-A1- 2 894 597
- US-A1- 2009 113 049
- US-A1- 2013 325 147
- US-A1- 2014 265 574
- US-B2- 8 401 709

## Description

### Domaine technique

L'invention se situe dans le domaine des procédés de supervision d'un système électrique.

L'invention concerne également un dispositif de supervision électrique et un système comportant le dispositif de supervision selon l'invention. Elle concerne enfin un produit programme d'ordinateur mettant en oeuvre le procédé de supervision selon l'invention.

### État de la technique antérieure

Depuis quelques années, les réseaux de distribution de l'énergie électrique sont au coeur des évolutions énergétiques et environnementales qui touchent notre société. En effet, de nombreuses applications exploitent le vecteur électrique afin d'accroître leur efficacité énergétique. C'est en particulier le cas des véhicules électriques ou du chauffage par pompes à chaleur. La diminution de la consommation énergétique des ménages et des industries s'accompagne souvent d'un accroissement de la part électrique de cette consommation. Le réseau électrique de distribution voit donc accroître l'évolution de son utilisation. Parallèlement, le consommateur domestique ou industriel alimenté par le réseau de distribution participe de plus en plus à la production d'énergie électrique, souvent d'origine renouvelable. Cette production n'est pas nécessairement en concomitance avec la consommation électrique ; de l'énergie est alors refoulée sur le réseau de distribution, voire le réseau de transport. En l'absence de maîtrise de ces évolutions, les contraintes sur les ouvrages amèneraient au renforcement du réseau de distribution en augmentant le nombre et les dimensions des lignes et des postes électriques avec des coûts élevés et des conséquences dommageables pour l'environnement. Cette stratégie serait également un véritable frein au développement des véhicules électriques alors que l'avantage majeur des véhicules électriques est sa faible émission de CO2. En effet les émissions de CO2 de ce type de véhicule dépendent de la teneur de CO2 de l'énergie électrique les alimentant, l'idéal étant que la charge de ces véhicules soit réalisée à base d'énergie renouvelable.

On connaît des procédés de supervision d'un réseau électrique dans l'art antérieur, tel que celui décrit par le document US8401709B2 qui concerne un système permettant de gérer et de contrôler de manière dynamique les ressources énergétiques distribuées dans un réseau de transmission/distribution.

Toutefois, cette solution n'est pas totalement satisfaisante car le système de gestion ne prend pas en compte l'état électrique du réseau de distribution dans le contrôle dynamique des ressources énergétiques distribuées. Aussi, le système de gestion ne propose pas d'intégrer de stratégie de reconfiguration de réseau.

On connaît en outre le document US2009/113049 qui propose un système de prévision et de prédiction en temps réel des pics électriques et de gestion de l'énergie, de la santé, de la fiabilité et des performances des systèmes d'alimentation électrique basés sur un réseau neuronal artificiel adaptatif.

### Exposé de l'invention

Un but de l'invention est notamment de remédier à tout ou partie des inconvénients précités. Selon l'invention, à la revendication 1, il est proposé un procédé de supervision d'un système électrique comprenant des charges électriques, un réseau et des sources d'énergie.

La présente description utilise les notions de domaines haute tension niveau B (HTB), haute tension niveau A (HTA), aussi appelée moyenne tension, et basse tension (BT).

En France, le domaine de la haute tension niveau B vise des tensions supérieures à 50 kV.

En France, le domaine de la haute tension niveau A vise des tensions supérieures à 1kv et inférieures à 50kv.

En France, le domaine de la basse tension vise des tensions inférieures à 1000V.

Des délimitations similaires de plages de tensions existant dans d'autres pays, on se référera à la norme applicable aux réseaux électriques de transport et de distribution pour délimiter les différents domaines.

Par exemple, aux États-Unis, ces trois domaines sont respectivement visés par les termes *high voltage, medium voltage,* et *low voltage.* Plus précisément, la norme ANSI C84.1-1989 sépare les sous domaines de la manière suivante : *high voltage,* pour domaine de tension de 69 kV à 230 kV, *medium voltage,* pour le domaine de tension de 600 V à 69 kV, *low voltage* pour les tensions inférieures à 600 V.

Chacune des charges électriques est raccordée au réseau électrique par l'intermédiaire d'un transformateur de tension de moyenne à basse tension.

Par transformateur de tension de moyenne à basse tension, la présente description vise un transformateur adapté pour transformer une tension du domaine de la moyenne tension en une tension du domaine de la basse tension. Selon le vocabulaire de l'homme du métier, le transformateur de tension de moyenne à basse tension est raccordé et à un tableau secondaire de distribution de niveau A du côté du domaine de la haute tension niveau A, et à un tableau principal de distribution de basse tension du côté du domaine de la basse tension. En France, le transformateur de tension de moyenne à basse tension est aussi désigné par transformateur HTA/BT par l'homme du métier.

Le réseau électrique est alimenté d'une part par au moins un transformateur de haute à moyenne tension, et d'autre part par une pluralité de sources d'énergie locales. Dans la présente description, le terme local signifie que la source est raccordée sur le domaine de tension HTA ou BT

Par transformateur de haute à moyenne tension, la présente description vise un transformateur adapté pour transformer une tension du domaine de la haute tension en une tension du domaine de la moyenne tension. Selon le vocabulaire de l'homme du métier, le transformateur de tension de haute à moyenne tension est raccordé et à un poste de livraison de niveau B du côté du domaine de la haute tension niveau B, et à un tableau principal de distribution de haute tension de niveau A du côté du domaine de la haute tension de niveau A. En France, le transformateur de haute à moyenne tension est aussi désigné par transformateur HTB/HTA par l' homme du métier.

Par nature d'une source d'énergie, la présente description vise, de manière non limitative, les sources d'énergie éolienne, photovoltaïque. La présente description envisage aussi la restitution d'énergie au réseau par un véhicule électrique, qui est alors vu comme une source d'énergie.

De préférence, au moins deux sources d'énergie de la pluralité de sources d'énergie sont de nature différente.

Le procédé de supervision selon la revendication 1, comporte les étapes suivantes :
- acquisition(s), de préférence de manière intermittente, de valeurs efficaces moyennées, sur un intervalle de temps prédéterminé, de la tension et du courant au niveau (en entrée ou en sortie) du transformateur de haute à moyenne tension,
- acquisition(s), de préférence de manière intermittente, sur l'intervalle de temps prédéterminé, de valeurs des puissances actives et réactives, de la tension et du courant, au niveau d'une partie au moins des sources d'énergie locales,
- acquisition(s), de préférence de manière intermittente, sur l'intervalle de temps prédéterminé de valeurs actives de la tension et du courant au niveau des départs du transformateur de haute à moyenne tension,
- acquisition(s), de préférence de manière intermittente, sur l'intervalle de temps prédéterminé, des valeurs des puissances actives et réactives, de la tension et du courant au niveau d'un premier sous-ensemble de la partie de charges électriques, chacune des charges électriques du premier sous-ensemble étant équipée d'un moyen de télérelève,
- acquisition d'un historique de données de comptage d'énergie, sur un second intervalle de temps, par exemple d'un an, de chacune des charges électriques de la partie de charges électriques n'appartenant pas au premier sous-ensemble.

Selon une possibilité, le moyen de télérelève peut être filaire, par exemple utilisation d'une ligne téléphonique ou par utilisation du courant porteur en ligne.

Alternativement, le moyen de télérelève peut être sans fil, par exemple utilisation d'une technologie de type GSM, pour l'anglais Global System for Mobile communications.

Selon un mode de réalisation, il est en outre prévu d'acquérir un historique de données de comptage d'énergie, sur le second intervalle de temps, de charges appartenant au premier sous-ensemble, c' est-à-dire de charges pourvues d'un moyen de télérelève.

Le procédé de supervision selon l'invention comporte en outre une étape calcul de consignes de supervision à partir de données représentatives de l'état du système électrique à un instant courant. La consigne de supervision peut être appliquée à une charge, à une source d'énergie ou à un stockage d'énergie.

Toujours selon le procédé de l'invention, et préalablement à l'application au système électrique des consignes de supervision résultant de l'étape de calcul, le procédé de supervision comporte les étapes suivantes :
- une détermination d'un état courant d'un modèle numérique du système électrique à l'instant courant,
- une étape de calcul d'un état virtuel du modèle numérique à un instant ultérieur à l'instant courant, à partir d'une application numérique des consignes de supervision à l'état courant du modèle numérique déterminé.

Si l'état virtuel ainsi calculé s'inscrit dans le domaine d'exploitation du réseau, appliquer les consignes de supervisions, sinon, modifier les consignes de supervisions et réappliquer l'étape de calcul de l'état virtuel du modèle numérique à un instant ultérieur par réévaluation de la représentation numérique virtuelle de l'état du système électrique à l'instant ultérieur à partir des consignes de supervisions modifiées.

Le domaine d'exploitation du réseau est l'espace en plan de tension, contraintes thermiques des lignes et des transformateurs l'intérieur duquel le réseau électrique peut fonctionner en sécurité. Si le réseau électrique est mis en exploitation en dehors de son domaine d'exploitation, sa structure risque d'être endommagée, voire détruite.

Avantageusement, la consigne de supervision peut être une consigne de modulation de puissance. La modulation de puissance peut, par exemple, être une consigne d'effacement. Une charge, une source, ou un stockage peuvent être effacés.

Selon une possibilité, les charges électriques d'un deuxième sous-ensemble de la partie de charges électriques sont dépourvues de capteur ou de moyen de télérelève. Le procédé peut comporter une étape additionnelle de reconstitution et d'enregistrement dans une mémoire de la courbe temporelle de charge de chacune des charges électriques du second sous-ensemble. Le calcul de consignes de supervision peut alors prendre en compte d'une part les données acquises et d'autre part les courbes temporelles du deuxième sous-ensemble. On adresse ainsi la difficulté posée par les charges qui ne sont pas équipées de moyen de télérelève.

Selon un mode de réalisation, le réseau électrique peut comporter une pluralité d'interrupteurs télécommandés pour la modification du schéma d'exploitation du réseau.

L'étape de reconstitution de la courbe temporelle de charge de chacune des charges électriques du second sous-ensemble peut alors prendre en compte l'état des interrupteurs télécommandés.

Les consignes de supervision peuvent comprendre des consignes de commande de l'état des interrupteurs. Il est ainsi possible de reconfigurer le réseau électrique.

Les consignes de supervision peuvent comprendre des consignes de commande de l'état de sources d'énergie. Les consignes de commandes peuvent par exemple comprendre des consignes pour écrêter l'état d'une source d'énergie renouvelable. Par source d'énergie renouvelable, la présente description désigne, par exemple, une source éolienne, photovoltaïque, de petite hydraulique (au fil de l'eau), ou de déchet, par valorisation des déchets par exemple méthanisation.

En particulier, la source d'énergie peut être un véhicule électrique.

Toujours selon une possibilité, le système électrique peut comporter en outre au moins un dispositif de stockage. Les consignes de supervision peuvent alors comprendre des consignes de commande de l'état de l'au moins un dispositif de stockage.

Selon l'invention, à la revendication 10, il est proposé un dispositif comportant des moyens d'acquisition configurés pour acquérir les différentes données mise en oeuvre dans une étape d'un procédé selon le premier aspect de l'invention, ou l'un ou plusieurs de ses perfectionnements, des moyens de calcul configurés pour effectuer les calculs effectués par les étapes de calcul du procédé et des moyens d'actionnement configurés pour appliquer les différentes consignes de supervision du procédé.

Selon l'invention, il est proposé aussi un système comportant un système électrique et un dispositif de supervision du système électrique selon le deuxième aspect de l'invention.

Selon l'invention, à la revendication 12, il est proposé un produit programme d'ordinateur, téléchargeable depuis un réseau de communication et/ou stocké sur un support lisible par ordinateur et/ou exécutable par un microprocesseur, et chargeable dans une mémoire interne d'une unité de calcul, comportant des instructions de code de programme qui, lorsqu'elles sont exécutées par l'unité de calcul, mettent en oeuvre les étapes du procédé selon le premier aspect de l'invention, ou l'un ou plusieurs de ses perfectionnements. Il est ainsi prévu d'implémenter sous forme de produit programme d'ordinateur un tel procédé.

### Description des figures

D'autres avantages et particularités de l'invention apparaîtront à la lecture de la description détaillée de mises en oeuvre et de modes de réalisation nullement limitatifs, au regard de dessins annexés sur lesquels :
- La figure 1 représente schématiquement un système selon un mode de réalisation de l'invention,
- La figure 2 représente schématiquement un procédé selon un mode de réalisation de l'invention.

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, pour autant que cette sélection ne s'écarte pas de la portée de l'invention telle que définie par les revendications annexées.

Sur les figures un élément apparaissant sur plusieurs figures conserve la même référence.

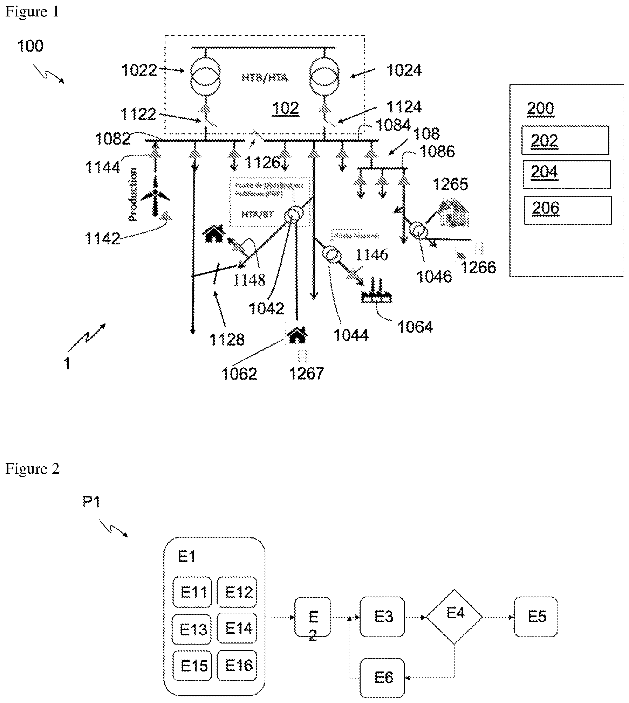

La figure 1 illustre un exemple de réalisation d'un système 1 selon l'invention.

Le système selon l'invention comportant un système électrique 100 et un dispositif de supervision 200 selon l'invention du système électrique 100.

Le système électrique 100 comporte :
- deux transformateurs de haute à moyenne tension, respectivement 1022 et 1024, disposés au sein d'un poste électrique HTB/HTA référencé 102,
- trois transformateurs de moyenne à basse tension, respectivement 1042, 1044 et 1046,
- deux charges, respectivement 1062 et 1066,
- un réseau électrique 108, fonctionnellement disposé entre les deux transformateurs de haute à moyenne tension, respectivement 1022 et 1024, et les deux charges, respectivement 1062 et 1064,
- une source d'énergie renouvelable de type éolienne 110,
- trois interrupteurs télécommandés 1122, 1124, 1126.,
- 12 interrupteurs télécommandés, un interrupteur en tête de départ HTA + deux interrupteur en ligne (1128 et 1146) + interrupteur du JdB HTA 1126 + interrupteur transformateur 1122 et 1124.

Le réseau électrique 108 est alimenté d'une part par les deux transformateurs de haute à moyenne tension, respectivement 1022 et 1024
Plus précisément, les interrupteurs télécommandés 1122 et 1124 sont normalement fermés (mais représenté normalement ouvert dans le schémas), et conduisent le courant depuis le transformateur 1022, respectivement 1024, vers un tableau principal de distribution HTA 1082, respectivement 1084.

L'interrupteur télécommandé 1126 est normalement ouvert. Toutefois, il est possible de reconfigurer le réseau, en fermant l'interrupteur 1126 dès lors que l'un des deux interrupteurs 1122 ou 1124 est ouvert. Le tableau principal de distribution HTA 1082, respectivement 1084, peut alors être alimenté par un autre transformateur.

Le réseau électrique est en outre alimenté par la source d'énergie renouvelable de type éolienne 110. A cet effet, la source d'énergie renouvelable est raccordée au tableau principal de distribution HTA 1082.

Chacun des transformateurs, respectivement 1042, 1044, de haute à moyenne tension est raccordée au poste électrique 102 par l'intermédiaire de ligne HTA, aussi appelée départ HTA, disposée entre le transformateur et le tableau principal de distribution 1082 ou 1084.

Chacune des charges électriques, respectivement 1062 et 1064, est raccordée à un tableau principal de distribution basse tension, 1082, respectivement 1084, par l'intermédiaire d'un transformateur, respectivement 1042, 1044, de haute à basse tension.

Une charge pilotable 1267, par exemple un chauffe-eau électrique ou un véhicule électrique, peut être également raccordée au tableau principal de distribution 1084 par l'intermédiaire du transformateur 1042 de haute à basse tension.

Le transformateur 1046 de haute à basse tension est raccordé au tableau principal 1084 de distribution HTA par l'intermédiaire d'un tableau secondaire 1086 de distribution basse tension.

Comme cela est représenté, des productions photovoltaïques, sur toiture résidentielle ou parc de production, respectivement 1265 et 1266, peuvent faire partie du réseau.

Comme représenté sur la figure, le réseau électrique comporte encore un autre interrupteur télécommandé 1128 (normalement ouvert) agencé pour choisir sélectivement l'alimentation en énergie de la charge 1162 parmi deux départs HTA.

Comme cela est illustré par les différents triangles sur la figure, le système électrique 100 comporte en outre des moyens de comptage ou télémesure.

Ces moyens de comptages peuvent être disposés au niveau d'une source, comme le moyen 1142, au niveau d'un départ HTA comme le moyen 1144, ou encore au niveau d'une charge comme les moyens 1146 et 1148, respectivement associés à la charge 1064 et 1062.

On peut noter que le compteur 1148 peut être de type compteur électronique et indiquer un index de consommation.

Toutefois, certaines charges, non représentées, ne disposent pas de moyen de télérelève.

Le dispositif de supervision 200 comporte :
- des moyens d'acquisition 202 configurés pour acquérir des données provenant du système électrique 100,
- des moyens de calcul 204 configurés pour effectuer des calculs pour déterminer des consignes de supervision qui vont être présentées ultérieurement,
- des moyens d' actionnement 206 configurés pour appliquer les différentes consignes de supervision au système électrique 100.

Le dispositif de supervision 200 est souvent appelé système de contrôle et d'acquisition de données ou SCADA, pour l'anglais *Supervisory Control And Data Acquisition.*

La particularité de l'invention réside notamment dans la configuration des moyens de calculs pour déterminer les consignes de supervision.

Selon une possibilité, le dispositif de supervision 200 peut en outre comporter des moyens de réception 208 de tarification de l'électricité.

Selon une possibilité avantageuse, les moyens de calcul 204 peuvent être configurés pour mettre en oeuvre des outils d'intelligence artificiel (par exemple des réseaux de neurones , de la logique floue) pour déterminer les consignes de supervision à partir d'un procédé selon l'invention, et/ou de tarification de l'électricité récupérées par les moyens de réception 208.

En référence à la figure 2, il est représenté un exemple de procédé P1 de supervision selon l'invention.

Le procédé P1 comporte une étape d'acquisition E1.

L'étape d'acquisition E1 comporte les étapes suivantes, mises en oeuvre via les moyens de d'acquisition 202 :
- acquisition E11 de valeurs efficaces moyennées, sur un intervalle de temps prédéterminé, de la tension et du courant au niveau des transformateurs de haute à moyenne tension 1022 et 124,
- acquisition E12 de valeurs, sur l'intervalle de temps prédéterminé (classiquement 10 minutes), des puissances actives et réactives, de la tension et du courant, au niveau d'une partie au moins des sources d'énergie locales, via le moyen de mesure 1142,
- acquisition E13 de valeurs, sur l'intervalle de temps prédéterminé, actives de la tension et du courant au niveau de départs du transformateur de haute à moyenne tension, via les moyens de mesure 1144,
- acquisition E14 de valeurs, sur l'intervalle de temps prédéterminé, des puissance active et réactive, de la tension et du courant au niveau d'un premier sous-ensemble de la partie, chacune des charges électriques du premier sous-ensemble étant équipée d'un moyen de télérelève, ou plus généralement d'un capteur de consommation, via le moyen de mesure 1148,
- acquisition E15 de l'historique des données de comptage d'énergie sur un second intervalle de temps de chacune des charges électriques des charges électriques n'appartenant pas au premier sous-ensemble,
- reconstitution et enregistrement E16 dans une mémoire de la courbe temporelle de charge de chacune des charges électriques du second sous-ensemble, le calcul de consignes de supervision prenant en compte d'une part les données acquises et d'autre part les courbes temporelles.

Le procédé P1 comporte une étape E2 de détermination d'un modèle numérique à l'instant courant du système électrique, à partir des données acquises au cours de l'étape E1 et de détermination de consignes de supervision (des outils d'intelligence artificiel permettent de consolider les résultats et de s'affranchir de données manquante et/ou erronées).

Le procédé P1 comporte une étape E3 comportant une application numérique virtuelle des consignes de supervision au modèle numérique à l'instant courant. En sortie de l'étape E3, il est ainsi déterminé un état virtuel du modèle numérique à un instant ultérieur à partir d'un modèle numérique à l'instant courant du système électrique.

Le procédé P1 comporte une étape E4 de vérification de la conformité l'état virtuel à un instant ultérieur avec le domaine d'exploitation du réseau.

Si l'état virtuel à un instant ultérieur ainsi calculé s'inscrit dans le domaine d'exploitation du réseau, le procédé P1 se poursuit par une étape E5 comportant une application des consignes de supervisions au système électrique 100.

Si l'état du réseau virtuel à un instant ultérieur ainsi calculé ne s'inscrit pas dans le domaine d'exploitation du réseau, le procédé P1 se poursuit par une étape E6 de détermination de consignes de supervisions modifiées.

L'étape E6 est alors poursuivie par l'étape E3, qui comporte alors une application numérique des consignes de supervision modifiée au modèle numérique à l'instant courant. En sortie de l'étape E3, il est ainsi déterminé un nouvel état virtuel du modèle numérique à un instant ultérieur à partir de l'état courant et des consignes modifiées. La vérification de l'étape E4 est alors effectuée.

Avec le procédé P1 selon l'invention, le réseau électrique est modélisé selon un niveau de granularité très fin, et il est possible de délivrer différentes consignes de supervision, telle que des consignes de modulation de puissance, de commande de l'état des interrupteurs, de commande de l'état des sources d'énergie ou encore de commande de l'état d'au moins un dispositif de stockage.

Bien sûr, l'invention n'est pas limitée aux exemples qui viennent d'être décrits et de nombreux aménagements peuvent être apportés à ces exemples sans sortir du cadre de l'invention telle que définie par les revendications annexées.

## Revendications

1. Procédé de supervision d'un système électrique (100) comprenant des charges électriques (1062, 1064...), un réseau électrique (108) et des sources d'énergie, chacune des charges électriques étant raccordée à un réseau électrique par l'intermédiaire d'un transformateur (1042, 1044, 1046) de haute à moyenne tension, ledit réseau électrique étant alimenté d'une part par au moins un transformateur (1022, 1024) et d'autre part par au moins une source d'énergie locale, comportant les étapes suivantes :
- acquisition (E11) de valeurs efficaces moyennées, sur un intervalle de temps prédéterminé, de la tension et du courant au niveau du transformateur de haute à moyenne tension ,
- acquisition (E12) de valeurs, sur ledit intervalle de temps prédéterminé, des puissances actives et réactives, de la tension et du courant, au niveau d'une partie au moins desdites sources d'énergie locales,
- acquisition (E13) de valeurs, sur ledit intervalle de temps prédéterminé, actives de la tension et du courant au niveau de départs dudit transformateur de haute à moyenne tension,
- acquisition (E14) de valeurs, sur ledit intervalle de temps prédéterminé, des puissance actives et réactives, de la tension et du courant au niveau d'un premier sous-ensemble de ladite partie, chacune des charges électriques dudit premier sous-ensemble étant équipée d'un moyen de télérelève,
- acquisition (E15) de l'historique des données de comptage d'énergie sur un second intervalle de temps de chacune des charges électriques des charges électriques n'appartenant pas au premier sous-ensemble,
le procédé comportant en outre une étape de calcul (E2) de consignes de supervision à partir de données représentatives de l'état du système électrique à un instant courant,
le procédé comportant en outre une étape préalable à une étape d'application (E5) au système électrique desdites consignes de supervision résultant dudit calcul, comprenant l'étape de :
- calculer (E3) un état virtuel d'un modèle numérique du système électrique à un instant ultérieur à partir d'un état courant du modèle numérique à l'instant courant et d'une application numérique des consignes de supervision audit état courant du modèle numérique, et l'étape de comparaison (E4) suivante :
∘ si l'état virtuel ainsi calculé s'inscrit dans le domaine d'exploitation du réseau, appliquer (E5) lesdites consignes de supervisions,
∘ sinon, modifier (E6) lesdites consignes de supervisions et réappliquer ladite étape de calcul de l'état virtuel du modèle numérique à l'instant ultérieur à partir desdites consignes de supervision modifiées.

2. Procédé de supervision selon la revendication 1, dans lequel la consigne de supervision est une consigne de modulation de puissance.

3. Procédé de supervision selon la revendication 1 ou 2, dans lequel les charges électriques d'un deuxième sous-ensemble de la partie de charges électriques sont dépourvues de capteur ou de moyen de télérelève, le procédé comportant une étape additionnelle (E16) de reconstitution et d'enregistrement dans une mémoire de la courbe temporelle de charge de chacune desdites charges électriques du second sous-ensemble, ledit calcul de consignes de supervision prenant en compte d'une part lesdites données acquises et d'autre part lesdites courbes temporelles.

4. Procédé de supervision selon la revendication 1, dans lequel le réseau électrique (108) comporte une pluralité d'interrupteurs télécommandés (1122, 1124, 1126, 1128) pour la modification du schéma d'exploitation du réseau électrique.

5. Procédé de supervision selon les deux revendications précédentes, dans lequel l'étape de reconstitution prend en compte l'état desdits interrupteurs.

6. Procédé de supervision selon la revendication 4 ou 5, dans lequel les consignes de supervision comprennent en outre des consignes de commande de l'état des interrupteurs.

7. Procédé de supervision selon l'une quelconque des revendications précédentes, dans lequel les consignes de supervision comprennent en outre des consignes de commande de l'état des sources d'énergie.

8. Procédé de supervision selon la revendication précédente, dans lequel la source d'énergie est un véhicule électrique.

9. Procédé de supervision selon l'une quelconque des revendications précédentes, comportant en outre au moins un dispositif de stockage et, si ledit état virtuel ainsi calculé s'inscrit dans le domaine d'exploitation du réseau, commander l'état de l'au moins un dispositif de stockage.

10. Dispositif de supervision (200) d'un système électrique (100) comportant des moyens d'acquisition (202) configurés pour :
- acquérir (E11) des valeurs efficaces moyennées, sur un intervalle de temps prédéterminé, de la tension et du courant au niveau du transformateur de haute à moyenne tension ,
- acquérir (E12) des valeurs, sur ledit intervalle de temps prédéterminé, des puissances actives et réactives, de la tension et du courant, au niveau d'une partie au moins desdites sources d'énergie locales,
- acquérir (E13) des valeurs, sur ledit intervalle de temps prédéterminé, actives de la tension et du courant au niveau de départs dudit transformateur de haute à moyenne tension,
- acquérir (E14) de valeurs, sur ledit intervalle de temps prédéterminé, des puissance actives et réactives, de la tension et du courant au niveau d'un premier sous-ensemble de ladite partie, chacune des charges électriques dudit premier sous-ensemble étant équipée d'un moyen de télérelève,
- acquérir (E15) de l'historique des données de comptage d'énergie sur un second intervalle de temps de chacune des charges électriques des charges électriques n'appartenant pas au premier sous-ensemble,
comportant en outre des moyens de calcul (204) configurés pour
- calculer (E3) un état virtuel d'un modèle numérique du système électrique à un instant ultérieur à partir d'un état courant du modèle numérique à l'instant courant et d'une application numérique des consignes de supervision (E2) audit état courant du
modèle numérique, et l'étape de comparaison (E4) suivante :
∘ si l'état virtuel ainsi calculé s'inscrit dans le domaine d'exploitation du réseau, appliquer (E5) lesdites consignes de supervisions,
∘ sinon, modifier (E6) lesdites consignes de supervisions et réappliquer ladite étape de calcul de l'état virtuel du modèle numérique à l'instant ultérieur à partir desdites consignes de supervision modifiées..

11. Système électrique (100) comportant un dispositif de supervision (200) dudit système électrique selon la revendication précédente.

12. Produit programme d'ordinateur, téléchargeable depuis un réseau de communication et/ou stocké sur un support lisible par ordinateur et/ou exécutable par un microprocesseur, et chargeable dans une mémoire interne d'une unité de calcul, comportant des instructions de code de programme qui, lorsqu'elles sont exécutées par l'unité de calcul, mettent en oeuvre les étapes suivantes au sein d'un système électrique (100) comprenant des charges électriques (1062, 1064...), un réseau électrique (108) et des sources d'énergie, chacune des charges électriques étant raccordée à un réseau électrique par l'intermédiaire d'un transformateur (1042, 1044, 1046) de haute à moyenne tension, ledit réseau électrique étant alimenté d'une part par au moins un transformateur (1022, 1024) et d'autre part par au moins une source d'énergie locale :
- acquisition (E11), par des moyens d'acquisition de valeurs efficaces moyennées, sur un intervalle de temps prédéterminé, de la tension et du courant au niveau du transformateur de haute à moyenne tension ,
- acquisition (E12) de valeurs, sur ledit intervalle de temps prédéterminé, des puissances actives et réactives, de la tension et du courant, au niveau d'une partie au moins desdites sources d'énergie locales,
- acquisition (E13) de valeurs, sur ledit intervalle de temps prédéterminé, actives de la tension et du courant au niveau de départs dudit transformateur de haute à moyenne tension,
- acquisition (E14) de valeurs, sur ledit intervalle de temps prédéterminé, des puissance actives et réactives, de la tension et du courant au niveau d'un premier sous-ensemble de ladite partie, chacune des charges électriques dudit premier sous-ensemble étant équipée d'un moyen de télérelève,
- acquisition (E15) de l'historique des données de comptage d'énergie sur un second intervalle de temps de chacune des charges électriques des charges électriques n'appartenant pas au premier sous-ensemble,
- calcul (E2) de consignes de supervision à partir de données représentatives de l'état du système électrique à un instant courant, et, préalablement préalable à une étape d'application (E5) au système électrique desdites consignes de supervision résultant dudit calcul,
∘ calculer (E3) un état virtuel d'un modèle numérique du système électrique à un instant ultérieur à partir d'un état courant du modèle numérique à l'instant courant et d'une application numérique des consignes de supervision audit état courant du modèle numérique, et l'étape de comparaison (E4) suivante
▪ si l'état virtuel ainsi calculé s'inscrit dans le domaine d'exploitation du réseau, appliquer (E5) lesdites consignes de supervisions,
▪ sinon, modifier (E6) lesdites consignes de supervisions et réappliquer ladite étape de calcul de l'état virtuel du modèle numérique à l'instant ultérieur à partir desdites consignes de supervision modifiées.

## Patentansprüche

1. Verfahren zum Überwachen eines elektrischen Systems (100), umfassend Strombelastungen (1062, 1064...), ein Stromnetz (108) und Energiequellen, wobei jede der Strombelastungen an ein Stromnetz mittels eines Hoch- bis Mittelspannungstransformators (1042, 1044, 1046) angeschlossen ist, wobei das Stromnetz einerseits von mindestens einem Transformator (1022, 1024) und andererseits von mindestens einer lokalen Energiequelle gespeist wird, umfassend die folgenden Schritte:
- Erfassen (E11), über ein zuvor bestimmtes Zeitintervall, von gemittelten Effektivwerten der Spannung und des Stroms hinsichtlich des Hoch- bis Mittelspannungstransformators,
- Erfassen (E12), über das zuvor bestimmte Zeitintervall, von Wirk- und Blindleistungswerten der Spannung und des Stroms hinsichtlich mindestens eines Teils der lokalen Energiequellen,
- Erfassen (E13), über das zuvor bestimmte Zeitintervall, von aktiven Werten der Spannung und des Stroms hinsichtlich der Abgangsfelder des Hochbis Mittelspannungstransformators,
- Erfassen (E14), über das zuvor bestimmte Zeitintervall, von Wirk- und Blindleistungswerten der Spannung und des Stroms hinsichtlich einer ersten Unterbaugruppe des Teils, wobei jede der Strombelastungen der ersten Unterbaugruppe mit einem Fernlesemittel ausgestattet ist,
- Erfassen (E15), über ein zweites Zeitintervall, des Verlaufs von Energiemessdaten von jeder der Strombelastungen der Strombelastungen, die nicht zu der ersten Unterbaugruppe gehören,
wobei das Verfahren ferner einen Berechnungsschritt (E2) von Überwachungsanweisungen anhand von Daten aufweist, die den Zustand des elektrischen Systems zu einem aktuellen Zeitpunkt abbilden, wobei das Verfahren ferner einen Schritt vor einem Schritt eines Anwendens (E5) der Überwachungsanweisungen, die aus der Berechnung resultieren, auf das elektrische System aufweist, umfassend den Schritt:
- Berechnen (E3) eines virtuellen Zustands eines digitalen Modells des elektrischen Systems zu einem späteren Zeitpunkt anhand eines aktuellen Zustands des digitalen Modells zu dem aktuellen Zeitpunkt und einer digitalen Anwendung der Überwachungsanweisungen auf den aktuellen Zustand des digitalen Modells, und den folgenden Vergleichsschritt (E4):
∘ falls der so berechnete virtuelle Zustand Teil des Netzbetriebsbereichs ist, Anwenden (E5) der Überwachungsanweisungen,
∘ andernfalls Ändern (E6) der Überwachungsanweisungen und erneutes Anwenden des Berechnungsschritts des virtuellen Zustands des digitalen Modells zu dem späteren Zeitpunkt anhand der geänderten Überwachungsanweisungen.

2. Verfahren zum Überwachen nach Anspruch 1, wobei die Überwachungsanweisung eine Leistungsmodulationsanweisung ist.

3. Verfahren zum Überwachen nach Anspruch 1 oder 2, wobei die Strombelastungen einer zweiten Unterbaugruppe des Teils der Strombelastungen ohne Sensor oder Fernlesemittel sind, wobei das Verfahren einen zusätzlichen Schritt (E16) der Wiederherstellung und Aufzeichnung in einem Speicher der zeitlichen Belastungskurve jeder der Strombelastungen der zweiten Unterbaugruppe aufweist, wobei die Berechnung der Überwachungsanweisungen einerseits die erfassten Daten und andererseits die zeitlichen Kurven berücksichtigt.

4. Verfahren zum Überwachen nach Anspruch 1, wobei das Stromnetz (108) eine Vielzahl von ferngesteuerten Schaltern (1122, 1124, 1126, 1128) für die Änderung des Betriebsdiagramms des Stromnetzes aufweist.

5. Verfahren zum Überwachen nach den zwei vorstehenden Ansprüchen, wobei der Wiederherstellungsschritt den Zustand der Schalter berücksichtigt.

6. Verfahren zum Überwachen nach Anspruch 4 oder 5, die Überwachungsanweisungen ferner umfassend Anweisungen zum Steuern des Zustands der Schalter.

7. Verfahren zum Überwachen nach einem der vorstehenden Ansprüche, die Überwachungsanweisungen ferner umfassend Anweisungen zum Steuern des Zustands der Energiequellen.

8. Verfahren zum Überwachen nach dem vorstehenden Anspruch, wobei die Energiequelle ein Elektrofahrzeug ist.

9. Verfahren zum Überwachen nach einem der vorstehenden Ansprüche, das ferner mindestens eine Speichervorrichtung aufweist und, falls der so berechnete virtuelle Zustand Teil des Netzbetriebsbereichs ist, Steuern des Zustands der mindestens einen Speichervorrichtung.

10. Überwachungsvorrichtung (200) eines elektrischen Systems (100),
die Erfassungsmittel (202) aufweist, die konfiguriert sind zum:
- Erfassen (E11), über ein zuvor bestimmtes Zeitintervall, von gemittelten Effektivwerten der Spannung und des Stroms hinsichtlich des Hoch- bis Mittelspannungstransformators,
- Erfassen (E12), über das zuvor bestimmte Zeitintervall, von Wirk- und Blindleistungswerten, der Spannung und des Stroms hinsichtlich mindestens eines Teils der lokalen Energiequellen,
- Erfassen (E13), über das zuvor bestimmte Zeitintervall, von aktiven Werten der Spannung und des Stroms hinsichtlich der Abgangsfelder des Hochbis Mittelspannungstransformators,
- Erfassen (E14), über das zuvor bestimmte Zeitintervall, von Wirk- und Blindleistungswerten der Spannung und des Stroms hinsichtlich einer ersten Unterbaugruppe des Teils, wobei jede der Strombelastungen der ersten Unterbaugruppe mit einem Fernlesemittel ausgestattet ist,
- Erfassen (E15), über ein zweites Zeitintervall, des Verlaufs der Energiemessdaten für jede der Strombelastungen der Strombelastungen, die nicht zu der ersten Unterbaugruppe gehören,
die ferner Berechnungsmittel (204) aufweist, die konfiguriert sind zum
- Berechnen (E3) eines virtuellen Zustands eines digitalen Modells des elektrischen Systems zu einem späteren Zeitpunkt anhand eines aktuellen Zustands des digitalen Modells zu dem aktuellen Zeitpunkt und einer digitalen Anwendung der Überwachungsanweisungen (E2) auf den aktuellen Zustand des digitalen Modells, und den folgenden Vergleichsschritt (E4):
∘ falls der so berechnete virtuelle Zustand Teil des Netzbetriebsbereichs ist, Anwenden (E5) der Überwachungsanweisungen,
∘ andernfalls Ändern (E6) der Überwachungsanweisungen und erneutes Anwenden des Berechnungsschritts des virtuellen Zustands des digitalen Modells zu dem späteren Zeitpunkt anhand der geänderten Überwachungsanweisungen.

11. Elektrisches System (100), das eine Überwachungsvorrichtung (200) des elektrischen Systems nach dem vorstehenden Anspruch aufweist.

12. Computerprogrammprodukt, das aus einem Kommunikationsnetz herunterladbar und/oder auf einem computerlesbaren Medium gespeichert und/oder durch einen Mikroprozessor ausführbar und in einen internen Speicher einer Berechnungseinheit ladbar ist, das Programmcodeanleitungen aufweist, die, wenn sie durch die Berechnungseinheit ausgeführt werden, die folgenden Schritte innerhalb eines elektrischen Systems (100) umsetzen, umfassend Strombelastungen (1062, 1064...), ein Stromnetz (108) und Energiequellen, wobei jede der Strombelastungen an ein Stromnetz mittels eines Hoch- bis Mittelspannungstransformators (1042, 1044, 1046) angeschlossen ist, wobei das Stromnetz einerseits von mindestens einem Transformator (1022, 1024) und andererseits von mindestens einer lokalen Energiequelle gespeist wird:
- Erfassen (E11), durch Erfassungsmittel, über ein zuvor bestimmtes Zeitintervall, von gemittelten Effektivwerten der Spannung und des Stroms hinsichtlich des Hoch- bis Mittelspannungstransformators,
- Erfassen (E12), über das zuvor bestimmte Zeitintervall, von Wirk- und Blindleistungswerten der Spannung und des Stroms hinsichtlich mindestens eines Teils der lokalen Energiequellen,
- Erfassen (E13), über das zuvor bestimmte Zeitintervall, von aktiven Werten der Spannung und des Stroms hinsichtlich der Abgangsfelder des Hochbis Mittelspannungstransformators,
- Erfassen (E14), über das zuvor bestimmte Zeitintervall, von Wirk- und Blindleistungswerten der Spannung und des Stroms hinsichtlich einer ersten Unterbaugruppe des Teils, wobei jede der Strombelastungen der ersten Unterbaugruppe mit einem Fernlesemittel ausgestattet ist,
- Erfassen (E15), über ein zweites Zeitintervall, des Verlaufs der Energiemessdaten von jeder der Strombelastungen der Strombelastungen, die nicht zu der ersten Unterbaugruppe gehören,
- Berechnen (E2) von Überwachungsanweisungen anhand von Daten, die den Zustand des elektrischen Systems zu einem aktuellen Zeitpunkt abbilden, und vor einem Schritt des Anwendens (E5) auf das elektrische System der Überwachungsanweisungen, die aus der Berechnung resultieren,
∘ Berechnen (E3) eines virtuellen Zustands eines digitalen Modells des elektrischen Systems zu einem späteren Zeitpunkt anhand eines aktuellen Zustands des digitalen Modells zu dem aktuellen Zeitpunkt und einer digitalen Anwendung der Überwachungsanweisungen auf den aktuellen Zustand des digitalen Modells, und den folgenden Vergleichsschritt (E4):
▪ falls der so berechnete virtuelle Zustand Teil des Netzbetriebsbereichs ist, Anwenden (E5) der Überwachungsanweisungen,
▪ andernfalls Ändern (E6) der Überwachungsanweisungen und erneutes Anwenden des Berechnungsschritts des virtuellen Zustands des digitalen Modells zu dem späteren Zeitpunkt anhand der geänderten Überwachungsanweisungen.

## Claims

1. Method for monitoring an electrical system (100) comprising electrical loads (1062, 1064...), an electrical network (108) and energy sources, each of the electrical loads being connected to an electrical network via a high to medium voltage transformer (1042, 1044, 1046), said electrical network being supplied by at least one transformer (1022, 1024) and by at least one local energy source, comprising the following steps:
- acquiring (E11) averaged RMS values, over a predetermined period of time, for the voltage and current at the high to medium voltage transformer,
- acquiring (E12) active and reactive power values, over said predetermined period of time, for the voltage and current at at least a portion of said local energy sources,
- acquiring (E13) active values, over said predetermined period of time, for the voltage and current at feeders of said high to medium voltage transformer,
- acquiring (E14) active and reactive power values, over said predetermined period of time, for the voltage and current at a first sub-assembly of said portion, each of the electrical loads of said first sub-assembly being equipped with a remote reading means,
- acquiring (E15) the energy metering data history, over a second period of time, for each of the electrical loads of the electrical loads not belonging to the first sub-assembly,
the method further comprising a step (E2) of calculating monitoring instructions on the basis of data representing the state of the electrical system at a current time, the method further comprising a step prior to a step (E5) of applying said monitoring instructions resulting from said calculation to the electrical system, comprising the step of:
- calculating (E3) a virtual state of a digital model of the electrical system at a later time on the basis of a current state of the digital model at the current time and a digital application of the monitoring instructions to said current state of the digital model, and the following comparison step (E4):
∘ if the virtual state calculated in this way falls within the network operating domain, applying (E5) said monitoring instructions,
∘ otherwise, modifying (E6) said monitoring instructions and reapplying said step of calculating the virtual state of the digital model at the later time on the basis of said modified monitoring instructions.

2. Monitoring method according to claim 1, wherein the monitoring instruction is a power modulation instruction.

3. Monitoring method according to claim 1 or 2, wherein the electrical loads of a second sub-assembly of the portion of electrical loads are without a sensor or remote reading means, the method comprising an additional step (E16) of reconstituting and recording in a memory the load time curve of each of said electrical loads of the second sub-assembly, said calculation of monitoring instructions taking into account said acquired data and said time curves.

4. Monitoring method according to claim 1, wherein the electrical network (108) comprises a plurality of remotely controlled switches (1122, 1124, 1126, 1128) for modifying the operating scheme of the electrical network.

5. Monitoring method according to the two preceding claims, wherein the reconstitution step takes into account the state of said switches.

6. Monitoring method according to claim 4 or 5, wherein the monitoring instructions further comprise instructions for controlling the state of the switches.

7. Monitoring method according to any of the preceding claims, wherein the monitoring instructions further comprise instructions for controlling the state of the energy sources.

8. Monitoring method according to the preceding claim, wherein the energy source is an electric vehicle.

9. Monitoring method according to any of the preceding claims, further comprising at least one storage device and, if said virtual state calculated in this way falls within the network operating domain, controlling the state of the at least one storage device.

10. Monitoring device (200) for an electrical system (100)
comprising acquisition means (202) which are configured for:
- acquiring (E11) averaged RMS values, over a predetermined period of time, for the voltage and current at the high to medium voltage transformer,
- acquiring (E12) active and reactive power values, over said predetermined period of time, for the voltage and current at at least a portion of said local energy sources,
- acquiring (E13) active values, over said predetermined period of time, for the voltage and current at feeders of said high to medium voltage transformer,
- acquiring (E14) active and reactive power values, over said predetermined period of time, for the voltage and current at a first sub-assembly of said portion, each of the electrical loads of said first sub-assembly being equipped with a remote reading means,
- acquiring (E15) the energy metering data history, over a second period of time, for each of the electrical loads of the electrical loads not belonging to the first sub-assembly,
further comprising calculation means (204) which are configured for
- calculating (E3) a virtual state of a digital model of the electrical system at a later time on the basis of a current state of the digital model at the current time and a digital application of the monitoring instructions (E2) to said current state of the digital model, and the following comparison step (E4):
∘ if the virtual state calculated in this way falls within the network operating domain, applying (E5) said monitoring instructions,
∘ otherwise, modifying (E6) said monitoring instructions and reapplying said step of calculating the virtual state of the digital model at the later time on the basis of said modified monitoring instructions.

11. Electrical system (100) comprising a monitoring device (200) for said electrical system according to the preceding claim.

12. Computer program product, downloadable from a communication network and/or stored on a computer-readable medium and/or executable by a microprocessor, and loadable onto an internal memory of a computing unit, comprising program code instructions which, when executed by the computing unit, implement the following steps within an electrical system (100) comprising electrical loads (1062, 1064...), an electrical network (108) and energy sources, each of the electrical loads being connected to an electrical network via a high to medium voltage transformer (1042, 1044, 1046), said electrical network being supplied by at least one transformer (1022, 1024) and by at least one local energy source:
- acquiring (E11), using acquisition means, averaged RMS values, over a predetermined period of time, for the voltage and current at the high to medium voltage transformer,
- acquiring (E12) active and reactive power values, over said predetermined period of time, for the voltage and current at at least a portion of said local energy sources,
- acquiring (E13) active values, over said predetermined period of time, for the voltage and current at feeders of said high to medium voltage transformer,
- acquiring (E14) active and reactive power values, over said predetermined period of time, for the voltage and current at a first sub-assembly of said portion, each of the electrical loads of said first sub-assembly being equipped with a remote reading means,
- acquiring (E15) the energy metering data history, over a second period of time, for each of the electrical loads of the electrical loads not belonging to the first sub-assembly,
- calculating (E2) monitoring instructions on the basis of data representing the state of the electrical system at a current time, and, firstly, prior to a step (E5) of applying said monitoring instructions resulting from said calculation to the electrical system,
∘ calculating (E3) a virtual state of a digital model of the electrical system at a later time on the basis of a current state of the digital model at the current time and a digital application of the monitoring instructions to said current state of the digital model, and the following comparison step (E4):
▪ if the virtual state calculated in this way falls within the network operating domain, applying (E5) said monitoring instructions,
▪ otherwise, modifying (E6) said monitoring instructions and reapplying said step of calculating the virtual state of the digital model at the later time on the basis of said modified monitoring instructions.
